# EUROPÄISCHE PATENTANMELDUNG

(11) **EP 1 519 211 A1**
(43) Veröffentlichungstag der Anmeldung: **30.03.2005**
(21) Anmeldenummer: 04022502.1
(22) Anmeldetag: 22.09.2004
(51) Int. Cl.: G02B 21/24

(54) **Frei platzierbare Anzeigeeinrichtung für Mikroskop- und/oder Bilddaten**

(30) Priorität: 26.09.2003 DE 20315100 U
(71) Anmelder: CARL ZEISS JENA GmbH, 07745 Jena (DE)
(72) Erfinder: Bauer, Frank, 37130 Gleichen-Diemarden (DE); Wagener, Michael, 37081 Göttingen (DE)

(57) **Zusammenfassung**

Die vorliegende Lösung betrifft eine Anzeigeeinrichtung für Mikroskop- und/oder Bilddaten, die aus ergonomischen und anwendungstechnischen Gründen an verschiedenen Stellen am Mikroskop oder in dessen unmittelbarer Umgebung angebracht bzw. aufgestellt werden kann.

Die erfindungsgemäße, frei platzierbare Anzeigeeinrichtung für Mikroskop- und/oder Bilddaten besteht aus einem Gehäuse mit einem Display und einer Datenverbindung zum Mikroskop. Die Datenverbindung erfolgt dabei über eine Anschlussleitung oder drahtlos. Das Display ist mindestens in eine Richtung schwenkbar und das Gehäuse der Anzeigeeinrichtung verfügt über Vorrichtungen zur Befestigung am Mikroskop und/oder zum sicheren Abstellen.

Die vorgeschlagene Lösung bietet die Möglichkeit die Anzeigeeinrichtung für Mikroskop- und/oder Bilddaten an beliebigen Stellen des Mikroskops zu befestigen oder in dessen Umfeld abzustellen und ergonomisch für den optimalen Blickkontakt auszurichten. Sie kann in den verschiedensten Bereichen der Mikroskopie Anwendung finden, in denen dem Betrachter die Mikroskop- und/oder Bilddaten über eine Anzeigeeinheit vermittelt werden sollen.

## Beschreibung

Die vorliegende Lösung betrifft eine Anzeigeeinrichtung für Mikroskopund/oder Bilddaten, die aus ergonomischen und anwendungstechnischen Gründen an verschiedenen Stellen am Mikroskop oder in dessen unmittelbarer Umgebung angebracht bzw. aufgestellt werden kann.

Die nach dem Stand der Technik bekannten Mikroskope verfügen über eine Vielzahl einstellbarer Funktionen und Untersuchungsmodi. Durch die zunehmende Automatisierung werden Mikroskopfunktionen, wie beispielsweise Objektivrevolver oder Reflektorrevolver zumeist über motorische Stellantriebe bewegt. Durch die damit verbundene Positionsrückmeldung der jeweiligen Komponente an die Mikroskopelektronik ist es auch möglich, die aktuellen Mikroskopdaten übersichtlich auf einem LCD-Display oder mittels Software auf einem Computer darzustellen, um stets einen Überblick über die momentanen Einstellwerte zu haben. Dabei sind solche Anzeigeeinrichtungen in der Regel in das Mikroskopstativ integriert.

So werden beispielsweise in der Offenlegungsschrift DE 101 06 275 eine Anordnung und ein Verfahren zur Steuerung und/oder Anzeige von Mikroskopfunktionen beschrieben, bei dem ein Display in oder in der Nähe der Augenhöhe einer Bedienperson vorgesehen ist. Dadurch kann die Bedienperson in einer entspannten Haltung beim Aufsehen vom Binokulareinblick sofort einen Überblick über die momentanen Eintellungen, wie Lampenhelligkeit, Objektivtyp, Beleuchtungsmodus u. a. gewinnen und über die am Mikroskop vorhandenen Bedientasten einfach verändern oder korrigieren. Das Display ist vorteilhaft ausschaltbar, um Blendwirkungen bei der Beobachtung durch den Binokulareinblick zu vermeiden. Durch die starre Position des Displays am Mikroskop kann es bei verschiedenen Anwendungen vorkommen, dass das Display beispielsweise durch Manipulatoren o. a. zumindest teilweise verdeckt wird. Der Bedienperson ist es somit nur noch mit Mühe möglich die dargestellten Mikroskopdaten korrekt abzulesen. Fehlerhaftes oder unvollständiges Ablesen kann auch dazu führen, dass von der Bedienperson falschen Einstellungen am Mikroskop gemacht werden. Eine weitere Ausgestaltung sieht dabei vor, das Display abnehmbar zu gestalten. Dies ist dahingehend vorteilhaft, dass die Bedienperson das Display neben sich legen kann um etwa Aufzeichnungen der momentanen Aufnahmebedingungen vorzunehmen.

Der vorliegenden Lösung liegt die Aufgabe zugrunde eine Anzeigeeinrichtung für Mikroskope zu entwickeln, die sowohl am Mikroskop als auch in dessen unmittelbaren Umfeld frei positionierbar ist, so dass die angezeigten Daten und/oder Bilder vom Bediener jederzeit sichtbar sind.

Die Aufgabe wird durch die Merkmale der unabhängigen Ansprüche gelöst. Bevorzugte Weiterbildungen und Ausgestaltungen sind Gegenstand der abhängigen Ansprüche.

Die vorgeschlagene Lösung bietet die Möglichkeit die Anzeigeeinrichtung für Mikroskop- und/oder Bilddaten an beliebigen Stellen des Mikroskops zu befestigen oder in dessen Umfeld abzustellen und ergonomisch für den optimalen Blickkontakt auszurichten. Sie kann in den verschiedensten Bereichen der Mikroskopie Anwendung finden, in denen dem Betrachter die Mikroskop- und/oder Bilddaten über eine Anzeigeeinheit vermittelt werden sollen.

Die Lösung wird nachfolgend anhand eines Ausführungsbeispieles beschrieben. Dazu zeigen:
- Figur 1:: die am Mikroskop befestigte Anzeigeeinheit mit gerade gerichtetem Display und
- Figur 2:: die im Umfeld des Mikroskops aufgestellte Anzeigeeinheit mit gekipptem Display.

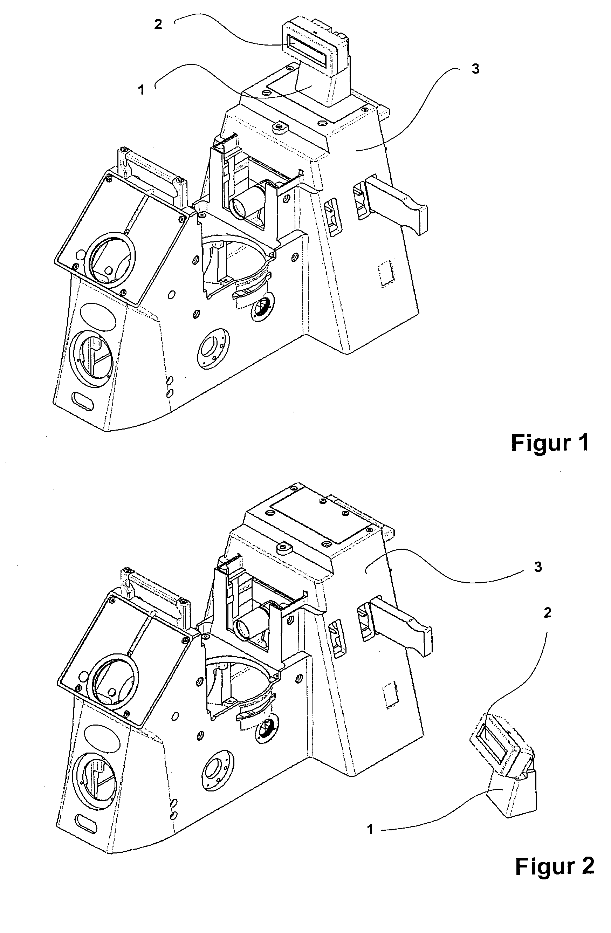

Die frei platzierbare Anzeigeeinrichtung für Mikroskop- und/oder Bilddaten besteht aus einem Gehäuse 1 mit einem Display **2** und einer Datenverbindung zum Mikroskop **3**. Die Datenverbindung kann dabei über eine Anschlussleitung erfolgen. Bevorzugt wird jedoch eine drahtlose Verbindung, wie beispielsweise durch Funk- oder IR-Wellen. Das Display **2** ist in mindestens eine Richtung schwenkbar, so dass es in die Blickrichtung des Bedienpersonals gerichtet werden kann. Am Gehäuse **1** der Anzeigeeinrichtung sind Vorrichtungen zur Befestigung am Mikroskop **3** und/oder zum sicheren Abstellen vorhanden, wie beispielsweise Magnete, Saugnäpfe, Klemmen o. ä. vorgesehen sind. Dazu zeigen **Figur 1** die an einem Mikroskop **3** befestigte Anzeigeeinheit mit gerade gerichtetem Display **2** und **Figur 2** die im Umfeld eines Mikroskops **3** aufgestellte Anzeigeeinheit mit gekipptem Display **2**.

Die vorgeschlagene Lösung bietet die Möglichkeit die Anzeigeeinrichtung für Mikroskopdaten und / oder Bilddaten an beliebigen Stellen des Mikroskops zu befestigen oder in dessen Umfeld abzustellen, sowie ergonomisch für den optimalen Blickkontakt auszurichten. Dies wirkt sich vorteilhaft aus, wenn die Anzeigeeinrichtung in speziellen Anwendungsfällen an ihrer Position für den Blick des Benutzers z. B. durch Proben, Tisch, Manipulatoren o. ä. verdeckt wird. In diesem Fall kann die Anzeigeeinrichtung an eine für den Benutzer besser einsehbare Stelle angebracht oder abgestellt bzw. ausgerichtet werden.

## Patentansprüche

1. Frei platzierbare Anzeigeeinrichtung für Mikroskop- und/oder Bilddaten bestehend aus einem Gehäuse (1) mit einem Display (2) und einer Datenverbindung zum Mikroskop (3), bei der die Datenverbindung über eine Anschlussleitung oder drahtlos erfolgt, das Display (2) in mindestens eine Richtung schwenkbar ist und das Gehäuse (1) der Anzeigeeinrichtung über Vorrichtungen zur Befestigung am Mikroskop (3) und/oder zum sicheren Abstellen verfügt.

2. Anzeigeeinrichtung nach Anspruch 1, bei der als Vorrichtungen zur Befestigung am Mikroskop (3) und/oder zum sicheren Abstellen Magnete, Saugnäpfe, Klemmen o. ä. vorgesehen sind.
